Europäisches Patentamt

(19) European Patent Office

Office européen des brevets

(11) Publication number: **0 081 529**
**B1**

(12) **EUROPEAN PATENT SPECIFICATION**

(45) Date of publication of patent specification: **28.10.87**

(21) Application number: **82901833.2**

(22) Date of filing: **21.06.82**

(86) International application number:
**PCT/AU82/00100**

(87) International publication number:
**WO 83/00004 06.01.83 Gazette 83/01**

(51) Int. Cl.⁴: **A 01 G 25/02**

(54) **PRESSURE-REGULATED DRIP FEED DEVICE.**

(30) Priority: **23.06.81 AU 9403/81**

(43) Date of publication of application:
**22.06.83 Bulletin 83/25**

(45) Publication of the grant of the patent:
**28.10.87 Bulletin 87/44**

(84) Designated Contracting States:
**FR GB NL**

(56) References cited:
**AU-D-3 712 878**
**AU-D-4 091 872**
**AU-D-5 140 879**
**AU-D-6 528 374**

(73) Proprietor: **RIS IRRIGATION SYSTEMS PTY.LTD.**
**Cnr Philip Highway and Hogarth Road**
**Elizabeth, S.A. 5112 (AU)**

(72) Inventor: **TUCKER, Alfred Denholm**
**Kersbrook Post Office**
**Kersbrook, S.A. 5231 (AU)**

(74) Representative: **Allden, Thomas Stanley et al**
**A.A. THORNTON & CO. Northumberland House**
**303-306 High Holborn**
**London WC1V 7LE (GB)**

Courier Press, Leamington Spa, England.

**EP 0 081 529 B1**

## Description

This invention relates to a drip feed device of the general type which breaks down fluid flow from a supply line to an outlet whereby restriction of the flow takes place to allow a steady trickle from the device.

Many forms of devices have been proposed heretofore and usually these have lengthy restricted grooves or paths either of helical or spiral configuration through which the fluid must flow to cause the necessary restriction to achieve the low-flow conditions.

Certain problems exist with this type of device in that where the fluid contains impurities or sediment the flow can be interrupted or hindered by there being a build up of solid material in the elongated flow channels, and for this reason it has been the practice to use relatively long flow paths to enable a reasonable cross-sectional area to be obtained to guard against ready blockage.

Devices are known which use this general principle but in which the design is such that they control the rate of flow in accordance with the pressure existing in the line at the time, and for this purpose resilient flow control members have been used so arranged that the resilient material of the control member can be pressed into a generally elongated spiral groove as a flow restriction device the spiral itself forming a restriction but flow being varied by reducing the cross-sectional area of the groove effective at that pressure by causing the resilient control member to bulge in to it, as is disclosed in DE—A—2829013.

In GB—A—2018113 there is generally disclosed a pressure-regulated drip feed device for irrigation purposes having a body and a cap adapted to form a chamber between them in which is housed a flow control member which is fluid pressure actuated to restrict flow proportionally to the pressure exerted thereon, the body having a cylindrical wall closed at one end by a transverse wall having an inlet member projecting from that side of the transverse wall opposite to the cylindrical wall, the inlet member having an inlet channel therein, the cap having at least one cylindrical wall to engage the cylindrical wall of the body and having a transverse wall across it to form with the transverse wall of the body the chamber therebetween, the transverse wall of the cap having an outlet aperture through it and providing a seat around the outlet aperture, the flow control member having a resilient membrane extending across the chamber and disposed between the inlet member and the outlet aperture, the membrane being pressed against the seat by fluid pressure and having a metering aperture therethrough which is radially spaced from the outlet aperture, at least one metering groove being provided whereby when the membrane is pressed against the seat the flow passage through the groove is restricted by which the groove meters fluid flow in proportion to the fluid pressure acting on the membrane, the membrane being positioned clear of the seat when no fluid pressure is present.

More particularly, the drip feed device of GB—A—2018113 has its metering groove formed in the resilient membrane and extending radially inwardly from the metering aperture which is positioned adjacent a circumferential region of the membrane which is clamped between the cylindrical walls of the body and the cap to extend across the chamber, the metering groove being on the downstream side of the membrane with respect to fluid flow through the chamber. Thereby, the metering groove is effectively not exposed to the force of the fluid flow until the membrane is deflected on to the seat provided by the transverse wall of the cap.

The problem with the drip feed device of GB—A—2018113 is that its metering groove provides a relatively short flow path and hence is necessarily of a relatively small cross-sectional area to give the desired trickle flow, with the attendant likelihood of blockage of the groove.

In accordance with the invention as claimed, the aforesaid generally disclosed drip feed device is characterised in that the transverse walls of the body and the cap are parallel to one another, the seat is formed on the transverse wall of the cap to project therefrom around the outlet aperture, the at least one metering groove is provided in the projecting seat to face the direction of fluid flow through the chamber from the inlet channel, and the flow control member has an axially extending perimeter wall arranged to engage on one end the transverse wall of the body and on the other end the transverse wall of the cap, the resilient membrane extending across the perimeter wall intermediate the ends thereof which positions the membrane clear of the projecting seat when no pressure fluid is present.

The drip feed device of the invention is advantageous in that it may be provided with a simple, metering grooves, the incidence of blockage of the device by sediment or other impurities being reduced.

Attention is also drawn to AU—B—40918/72 (471.125) which discloses a drip feed device having a valve cage with upper and lower valve seats through which extend water inlet and outlet channels respectively, the upper valve seat having a metering groove in its face for release of water at the desired restricted rate. A flow control member in the form of a steel ball normally rests on the lower valve seat but is raised therefrom under the pressure of incoming water and is carried upward to a closed position against the upper valve seat at which time water discharge is restricted to the rate of flow through the metering groove. The time it takes for the ball to reach its upper closed position is sufficient to permit a desired initial flushing action as a consequence of which any foreign material that may be in the metering groove is flushed away by the velocity of the water passing around the ball and through the outlet channel.

In order that the invention will be fully understood, an embodiment thereof which is given by way of example will now be described with reference to the accompanying drawing, in which:

Fig. 1 is a perspective view of a pressure-regulated drip feed device embodying the invention;

Fig. 2 is a central transverse section through the same drip feed device;

Fig. 3 is an exploded view of Fig. 2;

Figs. 4 and 5 are respectively an underside view of the cap and a plan view of the control member, both of the same drip feed device; and

Fig. 6 shows diagrammatically various shapes of metering grooves.

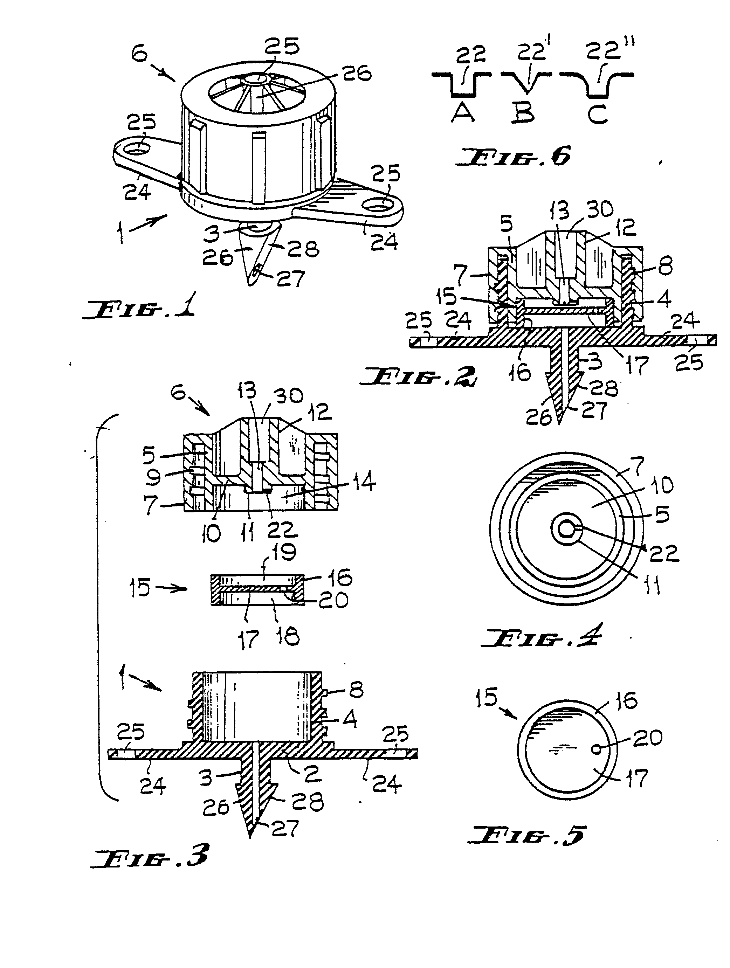

The drip feed device comprises a body 1 having a transverse disc-like wall 2, on one side of which is a centrally placed inlet member 3 adapted to be inserted through the wall of a supply line, and on the other side of which is an upstanding annular wall 4 adapted to be engaged by a cylindrical wall 5 of a cap 6. The cap 6 also has an outer annular wall 7 concentric with the inner annular wall 5 to form a space therebetween into which the upstanding annular wall '4 of the body 1 is engaged. A screw thread 8 on the outside of the annular wall 4 engages an internal screw thread 9 in the outer wall 7 of the cap 6 to allow the cap to be readily positioned on the body 1, and when required to be removed therefrom.

The cap 6 has across it a transverse wall 10 which has an annular seat 11 formed on one side of it and an annular outlet member 12, having an outlet aperture 13 therethrough, on the other side of it generally coaxial with the inlet member 3 so that there is formed between the transverse wall 10 on the cap 6 and the transverse wall 2 on the body 1 a chamber 14 into which can be placed the control member 15 to regulate the flow through the drip feed device. The transverse walls 2 and 10 are parallel to one another.

The control member 15 is disc shaped having an axially extending perimeter wall 16 and projecting across the opening, defined by the perimeter wall 16, a flexible membrane 17, the perimeter wall 16 being so proportioned that it forms on its opposite ends a seal between the transverse wall 10 of the cap 6 and the transverse wall 2 of the body 1, the membrane 17 extending across this chamber 14 at about the centre of the chamber to divide the chamber into a first space 18 and a second space 19, the first space 18 communicating with the inlet member 3 and the second space 19 communicating with the outlet aperture 13 of the outlet member 12.

The membrane 17 has through it a metering aperture 20 near the perimeter wall 16 to allow fluid from the first space 18 to flow into the second space 19 into which the annular seat 11 extends. The membrane 17 is preferably centrally positioned in the perimeter wall 16 to be reversible.

The chamber 14 is thus divided into two parts by the membrane 17, which membrane is normally, when no flow occurs, positioned adjacent to the annular seat 11 but is urged on to the annular seat when fluid pressure in the space 18 exceeds fluid pressure in the space 19.

The flexible membrane 17 of the control member 15 is thus so positioned in relation to the annular seat 11 that it is not in contact with the seat excepting when pressure is exerted by the fluid on the flexible membrane whereupon the membrane is pushed against the annular seat 11, and if the seat 11 was provided with a planar face over all of its area, fluid flow would be cut off, but to allow a flow through the device at such time the face of the seat 11 is provided with one or more metering grooves 22, preferably one as shown in the drawings, which groove 22 may be of somewhat rectangular cross-section so that a flow channel is formed through it.

In this way fluid can flow from the space 18 through the metering aperture 20 to the space 19 and thence to the outlet aperture 13 of the annular outlet member 12 but with a restriction caused by the groove 22 through which flow must occur to the outlet aperture 13, the amount of restriction varying in proportion to the force with which the flexible membrane is urged against the annular seat 11 and into the groove 22.

The annular outlet 12 has a socket 30 into which a distributor tube can be engaged if fluid from the outlet aperture 13 is to be piped to a remote area.

Thus there is provided a simple and effective device which has a control member 15 dividing a chamber 14 into a first space 18 and a second space 19 with the perimeter wall 16 of the control member such that it forms a seal between the transverse wall 10 of the cap 6 and the transverse wall 2 of the body 1 around the outside of this space.

As the cap 6 screws on to body 1, it forces the transverse wall 10 of the cap 6 and the transverse wall 2 of the body 1 onto the perimeter wall of the control member 15 to effect a liquid-tight seal, the seal increasing with fluid pressure because pressure acts from the first space 18 and second space 19 outwards against the inside of the perimeter wall 16 to force the perimeter wall 16 against the cylindrical wall 5.

Also the walls 4 and 5 form a seal to prevent fluid leaving the device, and the walls 4 and 5 can be slightly tapered to interengage with an interference fit as the cap 6 is screwed on to the body 1.

The control member 15 can be formed of rubber or a rubber-like substance or a resilient plastic and, as said, while a single groove 22 may be sufficient for the purpose, it would be possible to use more than one groove or channel but the basic principle remains the same in that the membrane 17 is forced against the annular seat 11 by the fluid pressure and ensures that a control of the flow through the groove 22 exists in proportion to the pressure exerted on the flexible membrane 17.

Variations of this type can readily be effected within the spirit of the invention and it will be realised for instance that the metering aperture 20 through the flexible membrane 17, which allows flow of fluid from the first space 18 to the second space 19, can be of particular shape such as having a conical entrance and a plain bore exit but such variations will be within the spirit of the invention. Generally it is preferred to have a plain metering aperture 20 to allow the button 15 to be inverted.

Similarly the cross-sectional shape of the groove or grooves 22 can be varied as shown in Fig. 6 where at A is shown a rectangular groove 22, at B a Vee shaped groove 22' and at C a rectangular groove 22'' having curved lead-in edges for the groove 22 to allow flow rates to be selected for different fluid pressure changes.

The body 1 has lugs 24 projecting outwardly from it to allow it to be locked to a line or hose through the wall of which the inlet member 3 is inserted, the lugs having apertures 25 therethrough.

In the embodiment shown the inlet member 3 is formed as a spear having an expanded conical end 26 which has its axis inclined to the axis of the inlet member 3 as shown to allow the inlet channel 27 to break through the side of the conical end 26, a flat 28 being conveniently formed on the conical end 26 to give greater protection against blockage of the inlet channel 27 during piercing of a flow line to which the device is to be fitted. The inlet member 3 can be positioned to have the inlet channel 27 face the direction of movement of fluid in a line or hose, or the device can be turned to have the flat 28 turned out of the direction of flow. The flat 28 is preferably in line with the two lugs 24 to allow easy selection of the position of the flat but could be at a different orientation.

## Claims

1. A pressure-regulated drip feed device for irrigation purposes having a body (1) and a cap (6) adapted to form a chamber (14) between them in which is housed a flow control member (15) which is fluid pressure actuated to restrict flow proportionally to the pressure exerted thereon, the body having a cylindrical wall (4) closed at one end by a transverse wall (2) having an inlet member (3) projecting from that side of the transverse wall opposite to the cylindrical wall, the inlet member having an inlet channel (27) therein, the cap having at least one cylindrical wall (5) to engage the cylindrical wall of the body and having a transverse wall (10) across it to form with the transverse wall of the body the chamber therebetween, the transverse wall of the cap having an outlet aperture (13) through it and providing a seat (11) around the outlet aperture, the flow control member having a resilient membrane (17) extending across the chamber and disposed between the inlet member and the outlet aperture, the membrane being pressed against the seat by fluid pressure and having a metering aperture (20) therethrough which is radially spaced from the outlet aperture, at least one metering groove (22; 22'; 22'') being provided whereby when the membrane is pressed against the seat the flow passage through the groove is restricted by which the groove meters fluid flow in proportion to the fluid pressure acting on the membrane, the membrane being positioned clear of the seat when no fluid pressure is present, characterised in that the transverse walls (2, 10) of the body and the cap are parallel to one another, the seat (11) is formed on the transverse wall of the cap to project therefrom around the outlet aperture, the at least one metering groove (22; 22'; 22'') is provided in the projecting seat to face the direction of fluid flow through the chamber from the inlet channel, and the flow control member (15) has an axially extending perimeter wall (16) arranged to engage on one end the transverse wall (2) of the body (1) and on the other end the transverse wall (10) of the cap (6), the resilient membrane (17) extending across the perimeter wall (16) intermediate the ends thereof which positions the membrane clear of the projecting seat when no pressure fluid is present.

2. A pressure-regulated drip feed device as claimed in claim 1, wherein the cap (6) has an outer wall (7) concentric with the wall (5) to form a cavity therebetween to accommodate the cylindrical wall (4) of the body (1), the outer wall of the cap having an internal screw thread (9) engaging an external screw thread (8) on the cylindrical wall of the body to allow the cap to have its transverse wall (10) urged down on to the perimeter wall (16) of the flow control member (15) and to urge the perimeter wall on to the transverse wall (2) of the body whereby to prevent fluid flow around the perimeter wall.

3. A pressure-regulated drip feed device as claimed in claim 1 or claim 2, wherein the outlet aperture (13) has an annular outlet member (12) communicating with the outlet aperture having in its outer end a socket (25) to receive a distributor tube.

4. A pressure-regulated drip feed device as claimed in any of the preceding claims, wherein the inlet member (3) has a conical end (26) expanded rearwardly from its point having its axis inclined to the axis of the inlet member whereby to cause the inlet channel (27) to open through the side of the expanded conical end remote from the point.

5. A pressure-regulated drip feed device as claimed in claim 4, wherein the inlet channel (27) is arranged in line with lugs (24) extending from two sides of the body (1).

6. A pressure-regulated drip feed device as claimed in any of the preceding claims, wherein the control member (15) is made of natural or synthetic rubber or resilient plastic.

7. A pressure-regulated drip feed as claimed in any of the preceding claims, wherein the control member (15) has its flexible membrane (17) positioned centrally in the perimeter wall (16) to be reversible.

8. A pressure-regulated drip feed device as claimed in any of the preceding claims, wherein the groove (22) in the seat (11) is of rectangular cross-section.

9. A pressure-regulated drip feed device as claimed in any of claims 1 to 7, wherein the groove (22') in the seat (11) is Vee shaped in cross-section.

10. A pressure-regulated drip feed device as claimed in any of claims 1 to 7, wherein the groove (22'') is contoured to have inwardly curved faces to selectively progressively regulate flow in relation to fluid pressure.

## Patentansprüche

1. Druckgeregelte Tropf-Versorgungseinheit für Bewässerungszwecke, mit einem Körper (25) und einer Kappe (6), die zwischen sich eine Kammer (14) bilden, in der ein Durchfluß-Regelglied (15) angeordnet ist, das durch Flüssigkeitsdruck betätigbar ist und den Durchfluß proportional zu dem auf ihn ausgeübten Druck reduziert, wobei der Körper eine zylindrische, an einem Ende durch eine Querwand (2) abgeschlossenen Wand (4) aufweist, und die Querwand mit einem Einlaßglied (3) versehen ist, das von der der zylindrischen Wand gegenüberliegenden Seite der Querwand vorsteht und das Einlaßglied einen Einlaßkanal aufweist, wobei ferner die Kappe mindestens eine zylindrische Wand (5) aufweist, welche die zylindrische Wand des Körpers erfaßt und mit einer diese überspannende Querwand (10) versehen ist, die mit der Querwand des Körpers die Kammer dazwischen bildet, wobei die Querwand der Kappe eine sie durchsetzende Auslaßöffnung mit einem Sitz (11) darum herum aufweist, wobei das Durchfluß-Regelglied eine elastische Membran (17) aufweist, die sich über die Kammer erstreckt, zwischen dem Einlaßglied und der Auslaßöffnung angeordnet ist, gegen den Sitz durch Flüssigkeitsdruck gepreßt wird, und mit einer sie durchsetzenden Zumeßöffnung (20) versehen ist, die radial von der Auslaßöffnung beabstandet ist, wobei schließlich eine Zumessungsrille (22, 22', 22'') vorgesehen ist, wodurch bei auf den Sitz gepreßter Membran der Durchflußweg durch die Rille reduziert wird, so daß die Rille den Flüssigkeits-Durchfluß proportional zu dem auf die Membran wirkenden Druck zumißt, während die Membran vom Sitz abgehoben ist, wenn kein Flüssigkeitsdruck anliegt, dadurch gekennzeichnet, daß die Querwände (2; 10) des Körpers und der Kappe parallel zueinander angeordnet sind, daß der Sitz (11) an der Querwand der Kappe ausgebildet ist, von dieser absteht und die Auslaßöffnung umgibt, daß mindestens eine Zumeßrille (22, 22', 22'') in dem vorstehenden Sitz angeordnet ist, und der Richtung des Flüssigkeits-Durchflusses durch die Kammer vom Einlaßkanal zu weist, daß das Durchfluß-Regelglied (15) eine sich axial erstreckende Umfangswand (16) aufweist, die an einem Ende die Querwand (2) des Körpers (1) und am anderen Ende die Querwand (10) der Kappe (6) erfaßt, und daß die elastische Membran (17) die Umfangswand (16) zwischen ihren Enden überspannt, wodurch die Membran im Abstand von dem vorstehenden Sitz positioniert ist, wenn kein Flüssigkeitsdruck anliegt.

2. Druckgeregelte Tropf-Versorgungseinheit nach Anspruch 1, dadurch gekennzeichnet, daß die Kappe (6) eine mit der Wand (5) konzentrische äußere Wand (7) aufweist und dazwischen einen Hohlraum bildet, der die zylindrische Wand (4) des Körpers (1) aufnimmt, wobei die äußere Wand der Kappe ein Innen-Schraubengewinde (9) aufweist, das in ein Außen-Schraubengewinde (8) der zylindrischen Wand des Körpers eingeschraubt ist, so daß die Kappe mit ihrer Querwand (10) auf die Umfangswand (16) des Durchfluß-Regelgliedes (15) aufgedrückt werden kann und die Umfangswand auf die Querwand (12) des Körpers aufgedrückt werden kann, so daß ein Flüssigkeits-Durchfluß um die Umfangswand herum verhindert wird.

3. Druckgeregelte Tropf-Versorgungseinheit nach Anspruch 1 oder 2, dadurch gekennzeichnet, daß die Auslaßöffnung (13) ein ringförmiges Auslaßglied (12) aufweist, das mit der Auslaßöffnung in Verbindung steht, die ihrerseits am äußeren Ende einen Sockel (25) zur Aufnahme eines Verteilerschlauchs aufweist.

4. Druckgeregelte Tropf-Versorgungseinheit nach einem der vorhergehenden Ansprüche, dadurch gekennzeichnet, daß das Einlaßglied (3) ein konisches Ende (26) aufweist, das sich von einer Spitze nach hinten aufweitet und dessen Achse zur Achse des Einlaßgliedes geneigt ist, so daß der Einlaßkanal (27) sich durch eine Seite des aufgeweiteten konischen Endes im Abstand von der Spitze öffnet.

5. Druckgeregelte Tropf-Versorgungseinheit nach Anspruch 4, dadurch gekennzeichnet, daß der Einlaßkanal (27) in einer Linie mit Laschen (24) angeordnet ist, die sich von beiden Seiten des Körpers (1) weg erstrecken.

6. Druckgeregelte Tropf-Versorgungseinheit nach einem der vorhergehenden Ansprüche, dadurch gekennzeichnet, daß das Regelglied (15) aus natürlichem oder künstlichem Gummi oder . elastischem Kunststoff besteht.

7. Druckgeregelte Tropf-Versorgungseinheit nach einem der vorhergehenden Ansprüche, dadurch gekennzeichnet, daß die flexible Membran (17) des Regelgliedes (15) in der Mitte der Umfangswand (16) angeordnet ist, um gegenläufig wirksam sein zu können.

8. Druckgeregelte Tropf-Versorgungseinheit nach einem der vorhergehenden Ansprüche, dadurch gekennzeichnet, daß die Rille (22) im Sitz (11) einen rechteckförmigen Querschnitt aufweist.

9. Druckgeregelte Tropf-Versorgungseinheit nach einem der Ansprüche 1 bis 7, dadurch gekennzeichnet, daß die Rille (22') im Sitz (11) einen V-förmigen Querschnitt aufweist.

10. Druckgeregelte Tropf-Versorgungseinheit nach einem der Ansprüche 1 bis 7, dadurch gekennzeichnet, daß die Rille (22'') so konturiert ist, daß sich nach innen gekrümmte Flächen aufweist, um in vorbestimmter Weise den Durchfluß Überproportionale in Abhängigkeit vom Flüssigkeitsdruck zu regeln.

## Revendications

1. Dispositif d'alimentation goutte à goutte réglé par la pression, pour l'irrigation, qui possède un corps (11) et un chapeau (6) adaptés pour former entre eux une chambre (14) dans laquelle est logé un organe de commande du débit (15) qui est actionné par la pression du fluide pour étrangler le débit proportionnellement à la pression qui s'exerce sur lui, le corps possédant une paroi cylindrique (4) fermée à une extrémité par une paroi transversale (2) et possédant un élément d'entrée (3) qui fait saillie sur le côté de la paroi transversale qui est à l'opposé de la paroi cylindrique, l'élément d'entrée présentant un canal d'entrée (27), le chapeau possédant au moins une paroi cylindrique (5) destinée à coopérer avec la paroi cylindrique du corps et possédant, en travers, une paroi transversale (10) qui sert à former, en combinaison avec la paroi transversale du corps, la chambre formée entre le corps et le chapeau, la paroi transversale du chapeau étant traversée d'une ouverture de sortie (13) et formant un siège autour de l'ouverture de sortie, l'organe de commande du débit présentant une membrane élastique (17) qui s'étend en travers de la chambre et est disposée entre l'élément d'entrée et l'ouverture de sortie, la membrane étant pressée contre le siège par la pression du fluide et étant traversée d'une ouverture de dosage (20) qui est espacée radialement de l'ouverture de sortie, cependant qu'il est prévu au moins une rainure de dosage (22; 22'; 22'') sous l'effet de laquelle, lorsque la membrane est pressée contre le siège, le passage d'écoulement dans la rainure est étranglé, de sorte que la rainure dose l'écoulement du fluide en proportion de la pression du fluide qui agit sur la membrane, la membrane étant placée en une position écartée du siège en l'absence de pression de fluide, caractérisé en ce que les parois transversales (2, 10) du corps et du chapeau sont parallèles entre elles, le siège (11) est formé sur la paroi transversale du chapeau de façon à faire saillie sur cette paroi en entourant l'ouverture de sortie, la ou les rainure(s) de dosage (22; 22'; 22'') est ou sont prévue(s) dans le siège saillant de façon à faire face au sens de l'écoulement du fluide à travers la chambre à partir du canal d'entrée, et l'organe de réglage du débit (15) possède une paroi périphérique (16) orientée axialement et agencée pour s'appuyer sur la paroi transversale (2) du corps (1) par une première extrémité et sur la paroi transversale (10) du chapeau (6) par l'autre extrémité, la membrane élastique (17) s'étendant en travers de la paroi périphérique (16), en un point intermédiaire entre les extrémités de cette paroi, ce qui positionne la membrane à distance du siège saillant en l'absence d'une pression de fluide.

2. Dispositif d'alimentation goutte à goutte réglé par la pression selon la revendication 1, dans lequel le chapeau (6) possède une paroi extérieure (7) concentrique à la paroi (5) pour former entre elle-même et cette paroi une cavité capable de recevoir la paroi cylindrique (4) du corps (1), la paroi extérieure du chapeau portant un filetage intérieur (9) qui entre en prise avec un filetage extérieur (8) de la paroi cylindrique du corps, pour permettre au chapeau d'avoir sa paroi transversale (10) pressée de haut en bas sur la paroi périphérique (16) de l'organe (15) de commande du débit et pour presser la paroi périphérique sur la paroi transversale (2) du corps de manière à empêcher le fluide de s'écouler autour de la paroi périphérique.

3. Dispositif d'alimentation goutte à goutte réglé par la pression selon la revendication 1 ou la revendication 2, dans lequel l'ouverture de sortie (13) présente un élément de sortie annulaire (12) qui communique avec l'ouverture de sortie et présente dans son extrémité extérieure une emboîture (25) destinée à recevoir un tube de distribution.

4. Dispositif d'alimentation goutte à goutte réglé par la pression selon l'une quelconque des revendications précédentes, dans lequel l'élément d'entrée (3) présente une extrémité conique (26) qui s'élargit vers l'arrière en partant de sa pointe, cette extrémité présentant son axe incliné sur l'axe de l'élément d'entrée de manière à faire en sorte que le canal d'entrée (27) débouche à travers le côté de l'extrémité conique élargie, à une certaine distance de la pointe.

5. Dispositif d'alimentation goutte à goutte réglé par la pression selon la revendication 4, dans lequel le canal d'entrée (27) est aligné sur des pattes (24) qui partent des deux côtés du corps (1).

6. Dispositif d'alimentation goutte à goutte réglé par la pression selon l'une quelconque des revendications précédentes, dans lequel l'élément de commande (15) est fait de caoutchouc naturel ou synthétique ou d'une matière plastique élastique.

7. Dispositif d'alimentation goutte à goutte réglé par la pression selon l'une quelconque des revendications précédentes, dans lequel l'organe de commande (15) présente sa membrane flexible (17) placée dans une position centrale dans la paroi périphérique (16), de manière à être réversible.

8. Dispositif d'alimentation goutte à goutte réglé par la pression selon l'une quelconque des revendications précédentes, dans lequel la rainure (22) ménagée dans le siège (11) est de section rectangulaire.

9. Dispositif d'alimentation goutte à goutte réglé par la pression selon l'une quelconque des revendications 1 à 7, dans lequel la rainure (22) ménagée dans le siège (11) est en forme de V en section.

10. Dispositif d'alimentation goutte à goutte réglé par la pression selon l'une quelconque des revendications 1 à 7, dans lequel la rainure (22) est profilée de manière à présenter des faces incurvées vers l'intérieur afin de permettre de régler sélectivement et progressivement le débit en fonction de la pression du fluide.

**FIG.1**

**FIG.2**

**FIG.3**

**FIG.4**

**FIG.5**

**FIG.6**